# EUROPÄISCHE PATENTSCHRIFT

(11) **EP 3 167 593 B1**
(45) Veröffentlichungstag und Bekanntmachung des Hinweises auf die Patenterteilung: **11.04.2018**
(21) Anmeldenummer: 16740931.7
(22) Anmeldetag: 21.06.2016
(51) Int. Cl.: H04L 29/06, G06F 9/48, H04L 29/08, H04L 9/08, H04W 4/00, G06F 21/60

(54) **VORRICHTUNG, VERFAHREN UND COMPUTERPROGRAMMPRODUKT ZUR SICHEREN DATENKOMMUNIKATION**
DEVICE, METHOD, AND COMPUTER PROGRAM PRODUCT FOR SECURE DATA COMMUNICATION
DISPOSITIF, PROCÉDÉ ET PRODUIT-PROGRAMME D'ORDINATEUR POUR UNE COMMUNICATION DE DONNÉES SÉCURISÉE

(30) Priorität: 23.06.2015 AT 505242015
(43) Veröffentlichungstag der Anmeldung: 17.05.2017
(73) Patentinhaber: Mahorka, Diethard, 3390 Melk (AT)
(72) Erfinder: Mahorka, Diethard, 3390 Melk (AT)
(74) Vertreter: Weiser & Voith Patentanwälte Partnerschaft
(86) Internationale Anmeldenummer: PCT/AT2016/050214
(87) Internationale Veröffentlichungsnummer: WO 2016/205845

(56) Entgegenhaltungen:
- US-A1- 2005 122 975
- US-A1- 2005 141 715
- US-A1- 2006 101 524
- TAREK KHALIFA ET AL: "A Survey of Communication Protocols for Automatic Meter Reading Applications", IEEE COMMUNICATIONS SURVEYS AND TUTORIALS, INSTITUTE OF ELECTRICAL AND ELECTRONICS ENGINEERS, US, Bd. 13, Nr. 2, 1. April 2011 (2011-04-01), Seiten 168-182, XP011321705, ISSN: 1553-877X, DOI: 10.1109/SURV.2011.041110.00058

## Beschreibung

Die vorliegende Erfindung betrifft Vorrichtungen, Verfahren und Computerprogrammprodukte zur sicheren Datenkommunikation nach einem Netzwerkprotokoll, das mehrere zu einem Protokoll-Stack geschichtete Kommunikationsschichten hat.

Eine der bekanntesten und ältesten Schichtenarchitekturen für Netzwerkprotokolle ist das OSI-Referenzmodell der ITU (International Telecommunication Union) bzw. ISO (International Organisation for Standardization) mit den sieben Schichten Bitübertragungsschicht (Schicht 1), Sicherungsschicht (Schicht 2), Vermittlungsschicht (Schicht 3), Transportschicht (Schicht 4), Sitzungsschicht (Schicht 5), Darstellungsschicht (Schicht 6) und Anwendungsschicht (Schicht 7). Auch das TCP/IP-Referenzmodell, auf dem die meisten der heutigen Internetprotokolle basieren, ist ein geschichtetes Netzwerkprotokoll. Beim TCP/IP-Referenzmodell werden nur vier Schichten verwendet, indem die Bitübertragungs- und Sicherungsschichten zu einer Netzzugangsschicht und die Sitzungs-, Darstellungs- und Anwendungsschichten zu einer Anwendungsschicht vereinigt werden. Geschichtete Netzwerkprotokolle werden aber auch in elektronischen Steuerungen (Electronic Control Units, ECUs) verwendet, welche über Bussysteme miteinander sicher kommunizieren sollen, beispielsweise nach der Norm IEC 61508 oder auf dem Fahrzeugsektor nach der daraus abgeleiteten Norm ISO 26262 in verschiedensten ASIL-Stufen (Automotive Safety Integrity Levels), oder in Kommunikationsgeräten zur Vernetzung von Fahrzeugen, Stichwort "car-to-car" (Car2Car) oder "car-to-infrastructure" (Car2X).

Zur Implementierung solcher geschichteter Netzwerkprotokolle in Endgeräten werden die einzelnen Schichten häufig in autarken Softwaremodulen bzw. -tasks verkapselt, welche über genau definierte Schnittstellen bzw. Kommunikationskanäle miteinander in Verbindung stehen. Die gleichsam "vertikale" Stapelung bzw. Übereinanderanordnung der die einzelnen Protokollschichten abbildenden Softwaremodule wird dabei auch als "Protokoll-Stack" bezeichnet.

Protokoll-Stacks haben verschiedenste teilweise gegensätzliche Anforderung zu erfüllen. Zum einen sollen sie zunehmend höheren Sicherheitsanforderungen genügen, was durch immer komplexere kryptografische Verschlüsselungsverfahren auf Ebene der einzelnen Protokollschichten bewerkstelligt wird. Die Softwaremodule im Protokoll-Stack benötigen dazu auch jeweils entsprechende kryptografische Schlüssel zum Ver- und Entschlüsseln des Datenverkehrs auf Ebene ihrer Schicht. Zum anderen sollen Protokoll-Stacks auf möglichst sparsamen und kostengünstigen Prozessorsystemen laufen. Meist handelt es sich dabei um eingebettete (embedded) Single-Chip-Prozessorsysteme, z.B. für Endbenutzermodems ("Residential Gateways") oder internetfähige Endgeräte (Stichwort: "Internet of Things"), in denen der Protokoll-Stack als sog. Middleware fungiert. Gleichzeitig soll auch der Portieraufwand des Protokoll-Stacks von einem spezifischen Prozessor- oder Betriebssystem auf ein anderes möglichst gering sein, was eine entsprechende Abkapselung der Softwaremodule über Hard- oder Software-Abstraktionsschichten erfordert.

Die Bedeutung von Protokoll-Stacks als Middleware gerade in der heterogenen Umgebung des "Internet of Things" ist in Bandyopadhyay S. et al., "Role of Middleware for Internet of Things: A Study", International Journal of Computer Science & Engineering Survey (IJCSES), Bd. 2, Nr. 3, August 2011, beschrieben. Einen guten Überblick über die Sicherheitsanforderungen in derartigen Umgebungen geben Kocher, P., et. al., im "Security as a New Dimension in Embedded System Design", DAC 2004, 7 - 11 Juni 2004, San Diego, Kalifornien, USA.

Die Erfindung setzt sich zum Ziel, Vorrichtungen und Verfahren der einleitend genannten Art zu schaffen, welche die vorgenannten gegensätzlichen Anforderungen besser zur Deckung bringen als die bekannten Lösungen.

Dieses Ziel wird in einem ersten Aspekt der Erfindung mit einer Vorrichtung zur sicheren Datenkommunikation gemäß einem Netwerkprotokoll mit mehreren zu einem Protokoll-Stack geschichteten Kommunikationsschichten erreicht, die ein Prozessorsystem hat, in dem ein Prozessor, von einem Task-Scheduler gesteuert, mehrere autarke Softwaremodule abarbeitet, die jeweils eine Kommunikationsschicht des Protokoll-Stacks ausführen,
wobei die Softwaremodule über Kommunikationskanäle zum Protokoll-Stack verkettet sind und der Protokoll-Stack mit einem Schnittstellen-Framework zur Datenkommunikation mit einem externen Netzwerk in Verbindung steht, und
wobei zumindest ein Softwaremodul einen zugeordneten kryptographischen Schlüssel zur sicheren Dankenkommunikation in seiner Kommunikationsschicht verwendet,
welche Vorrichtung sich dadurch auszeichnet,
dass der Task-Scheduler dafür ausgebildet ist, einen über das Schnittstellen-Framework aus dem externen Netzwerk erhaltenen Schlüssel an das zugeordnete Softwaremodul zu verteilen.

In einem zweiten Aspekt schafft die Erfindung dazu ein Verfahren zur sicheren Datenkommunikation gemäß einem Netzwerkprotokoll mit mehreren zu einem Protokoll-Stack geschichteten Kommunikationsschichten,
wobei in einem Prozessorsystem ein Prozessor, von einem Task-Scheduler gesteuert, mehrere autarke Softwaremodule abarbeitet, die jeweils eine Kommunikationsschicht des Protokoll-Stacks ausführen,
wobei die Softwaremodule über Kommunikationskanäle zum Protokoll-Stack verkettet sind und der Protokoll-Stack mit einem Schnittstellen-Framework zur Datenkommunikation mit einem externen Netzwerk in Verbindung steht, und
wobei zumindest ein Softwaremodul einen zugeordneten kryptographischen Schlüssel zur sicheren Datenkommunikation in seiner Kommunikationsschicht verwendet,
welches Verfahren sich dadurch auszeichnet,
dass der zumindest eine Schlüssel über das Schnittstellen-Framework aus dem externen Netzwerk erhalten und vom Task-Scheduler an das zugeordnete Softwaremodul verteilt wird.

Gemäß der Erfindung wird somit der Task-Scheduler, der in einem Single-Prozessorsystem, z.B. in einem Residental Gateway, einem Securitygateway oder einer Steuerelektronik, für das Task-Switching zwischen autarken, die einzelnen Protokollschichten abbildenden Softwaremodulen zuständig ist, für die Verteilung von kryptografischen Sicherheitsschlüsseln, die beispielsweise von einem Kommunikationspartner oder einer zentralen Schlüsselerzeugungsinstanz im Netzwerk kommen, an die jeweiligen Softwaremodule eingesetzt. Dies erlaubt eine besonders einfache Implementierung von beliebigen Sicherheitsmaßnahmen auf Ebene der verschiedenen Protokollschichten, ohne die Verkapselung und Abstraktion der einzelnen Softwaremodule gegenüber der Hardware, dem Betriebssystem, Peripherietreibern od.dgl. zu beeinträchtigen und ohne besondere Ressourcen für die Schlüsselverteilung zu benötigen: Der bereits vorhandene Task-Scheduler wird zu diesem Zweck einfach mitverwendet.

Die erfindungsgemäße Lösung eignet sich für jede Art von Netzwerkprotokoll, beispielsweise nach dem TCP/IP-Referenzmodell im Falle eines Internetmodems oder geschichteten Protokollen zur Realisierung sicherheitskritischer Anforderungen entsprechend den in der ISO 26262 definierten Automotive Integrity Safety Levels (ASIL) im Falle von elektrischen Fahrzeugkomponenten. Nach einer anderen Ausführungsform der Erfindung ist das Netzwerkprotokoll nach dem OSI-Referenzmodell aufgebaut und jedes Softwaremodul führt eine Schicht des OSI-Referenzmodells aus, beispielsweise für ein ISDN-Modem oder einen ISDN/IP-Schnittstellenadapter, auch "ALL-IP-Modem" genannt.

Die Softwaremodule können jeweils einen Eingang für mindestens einen Nachrichtenkanal haben, welcher mit dem Task-Scheduler verbunden ist, um so den jeweiligen Schlüssel zu erhalten.

Der (zumindest eine) Nachrichtenkanal des Softwaremoduls kann auch dazu verwendet werden, das Softwaremodul in einen Debugging-Modus zu versetzen und es z.B. mittels Debugging-Nachrichten, die über den Nachrichtenkanal ausgetauscht werden, zu debuggen und/oder insbesondere zu solchen Debugging-Zwecken ein- und auszuschalten.

Ein vom Task-Scheduler erhaltener weiterer Schlüssel kann insbesondere auch dazu verwendet werden, den Nachrichtenverkehr auf dem Nachrichtenkanal zu ver- bzw. entschlüsseln, um auch hier eine sichere Kommunikation zu gewährleisten. Beispielsweise kann dieser weitere Schlüssel vom Softwaremodul für eine verschlüsselte Übertragung jenes Schlüssels, den es in seiner Protokollschicht verwendet, genutzt werden.

In einer vorteilhaften Ausführungsform der Erfindung kann der Task-Scheduler auch Teil eines vom Prozessor ausgeführten Hardware-Abstraktionsmoduls für die Softwaremodule sein, das den Softwaremodulen jeweils eine hardwareabstrahierte Betriebssystemumgebung zur Verfügung stellt und zu diesem Zweck bereits zumindest einen Nachrichtenkanal zu diesen hat.

Die Erfindung eignet sich grundsätzlich für alle Arten von Datenkommunikations-Endgeräten, seien diese auch lediglich Kommunikationsschnittstellen in Steuergeräten, beispielsweise E-CUs, die über Datenbusse miteinander sicher kommunizieren. Bevorzugt ist die Vorrichtung ein Modem oder eine ECU und das Prozessorsystem ein Einzelprozessorsystem, in dem der Protokoll-Stack als "Embedded Security Middleware" fungiert. Alternativ kann diese "Embedded Security Middleware" auch in einem Multiprozessorsystem eingebettet sein.

In einem dritten Aspekt schafft die Erfindung ferner ein Computerprogrammprodukt, verkörpert auf einem maschinenlesbaren Datenträger, das dafür ausgebildet ist, das hier vorgestellte Verfahren zu implementieren. Die Erfindung ist in den vorliegenden Ansprüchen offenbart. Die Erfindung wird nachstehend anhand eines in den beigeschlossenen Zeichnungen dargestellten Ausführungsbeispiels näher erläutert. In den Zeichnungen zeigt:
Fig. 1 die Systemarchitektur der Vorrichtung der Erfindung in einem Blockdiagramm;
Fig. 2 eines der Softwaremodule der Vorrichtung von Fig. 1 im Detail; und
Fig. 3 ein Datenflussdiagramm des Verfahrens der Erfindung bei der Datenkommunikation zweier Vorrichtungen nach Fig. 1 über ein Netzwerk.

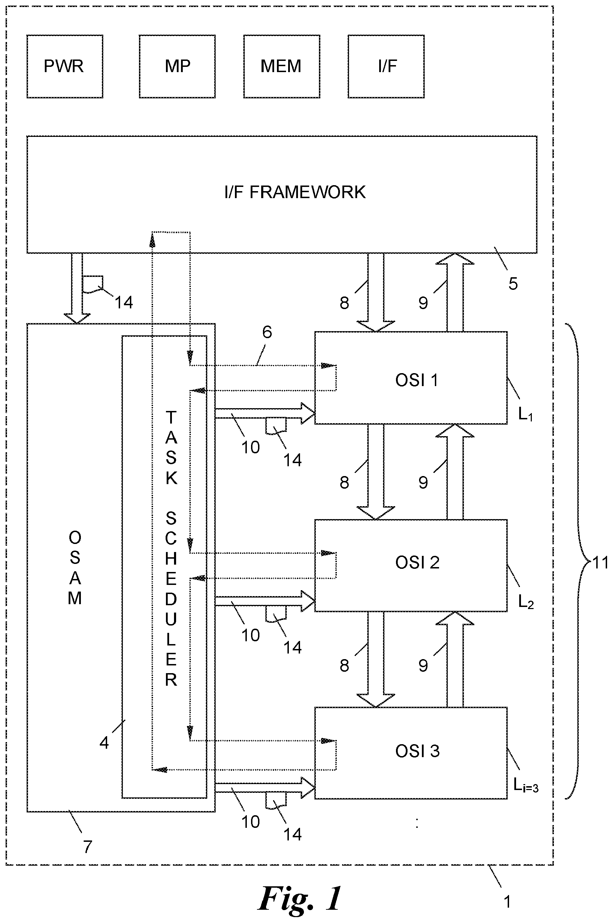

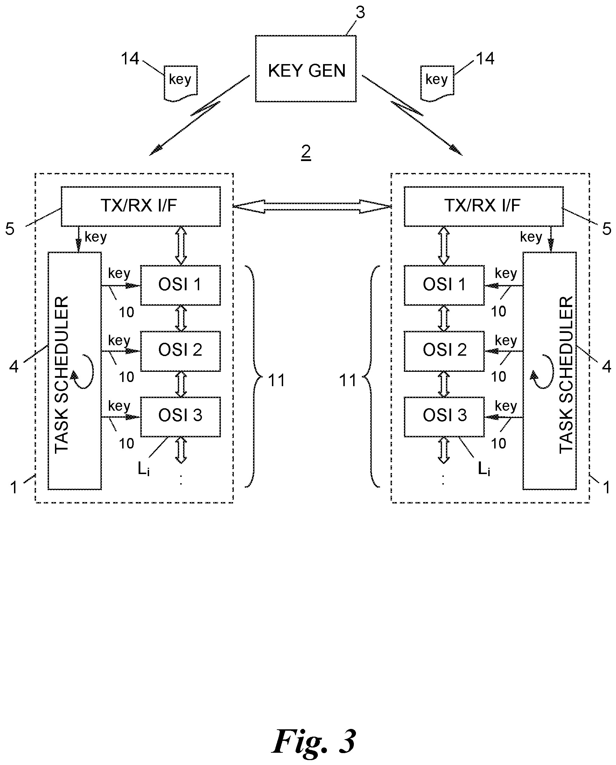

In Fig. 1 ist eine Vorrichtung 1 zur Datenkommunikation gemäß einem geschichteten Netwerkprotokoll dargestellt, beispielsweise dem OSI- oder TCP/IP-Referenzmodell. Fig. 3 zeigt zwei derartige Vorrichtungen 1, die über ein Netzwerk 2 miteinander und (optional) mit einer Schlüsselerzeugungszentrale 3 kommunizieren, wie später noch ausführlicher erläutert. Das Netzwerk 2 kann beispielsweise das Internet, ein WAN (Wide Area Network), LAN (Local Area Network), Mobilfunknetz und/oder ein kabelgebundenes Telefonnetz sein, und die Vorrichtung 1 kann darin einen Netzwerk-Switch oder -Router, ein Modem, ein Gateway oder ein Endgerät bilden. Im Falle eines Telefonnetzes ist das Netzwerkprotokoll in der Regel nach dem OSI-Referenzmodell aufgebaut und die Vorrichtung 1 ist z.B. ein ISDN- oder ALL-IP-Endgerät; im Falle des Internets, eines WANs oder LANs ist das Netzwerkprotokoll in der Regel nach dem TCP/IP-Referenzmodell aufgebaut und die Vorrichtung 1 ist z.B. ein ADSL- oder Powerline-Modem. Das Netzwerk 2 kann aber auch ein geräteinternes Bussystem sein, über das elektronische Komponenten über ein geschichtetes Netzwerkprotokoll ("Busprotokoll") miteinander sicher kommunizieren, beispielsweise elektronische Fahrzeugkomponenten an einem Onboard-Fahrzeugbussystem. Die Vorrichtung 1 kann in diesem Fall z.B. eine elektronische Steuerung (Electronic Control Unit, ECU) sein, die über das Onboard-Bussystem des Fahrzeugs mit anderen elektronischen Komponenten kommuniziert.

Die in Fig. 1 gezeigte Vorrichtung 1 wird in der Regel in Softwaretechnik auf einem Hardware-Prozessorsystem implementiert, das dazu - wie in der Technik bekannt - Stromversorgungen PWR, Speicher MEM, Schnittstellen I/F und zumindest einen Prozessor MP umfasst, welcher entsprechende Softwarekomponenten abarbeitet. Die in Fig. 1 dargestellten Komponenten der Vorrichtung 1 sind daher Softwarekomponenten, welche zur Laufzeit der Software im Speicher MEM der Vorrichtung 1 vorliegen und vom Prozessor MP entsprechend abgearbeitet werden, wie in der Technik bekannt.

Das Prozessorsystem, auf dem die Vorrichtung 1 implementiert ist, ist in der Regel ein kostengünstiges Single-Chip-Prozessor-System mit nur einem Hauptprozessor MP, der die in Fig. 1 gezeigten (Software)-Komponenten der Vorrichtung 1 sequentiell in Form von Tasks abarbeitet. Dazu ist ein Tasks-Scheduler 4 vorgesehen, der die Programmsteuerung des Prozessors MP periodisch sequentiell an einzelne Softwaremodule L₁, L₂, ..., allgemein Lᵢ, sowie ein Schnittstellen-Frameworkmodul 5 übergibt, siehe Programmablaufsteuerungsschleife 6. Der Task-Scheduler 4 ist seinerseits eine Softwarekomponente und kann Teil eines vom Prozessor MP ausgeführten Hardware- und/oder Betriebssystem- bzw. Software-Abstraktionsmoduls (Operating System Abstraction Module, OSAM) 7 sein, das ebenfalls im Zuge der Schleife 6 vom Prozessor MP regelmäßig bedient bzw. abgearbeitet wird.

Das Abstraktionsmodul 7 stellt gleichsam eine Betriebssystemumgebung für die Softwaremodule Lᵢ zur Verfügung, z.B. zur Bereitstellung von Zeitgebern, zur Verwaltung von dynamischen Speicheranforderungen etc. sowie zur Errichtung von Kommunikationskanälen 8, 9, über welche sie untereinander bzw. mit dem Schnittstellen-Frameworkmodul 5 in Verbindung stehen, und für Nachrichtenkanäle 10, über welche sie Steuerungsnachrichten vom Abstraktionsmodul 7 bzw. dessen Task-Scheduler 4 empfangen können.

Der Prozessor MP der Vorrichtung 1 kann auch Teil eines Multiprozessorsystems sein, das einen Verbund einzelner Vorrichtungen 1 bildet. Dabei können sich mehrere Vorrichtungen 1 einen Prozessor MP teilen, oder eine Vorrichtung 1 kann mehrere Prozessoren MP haben. In einem solchen Multiprozessorsystem kann der Datenaustausch zwischen den Vorrichtungen 1 insbesondere auch über die Kommunikationskanäle 8, 9 eines oder mehrerer der Softwaremodule Lᵢ realisiert sein.

Jedes Softwaremodul Lᵢ kann dabei einen Eingang für mehr als einen Nachrichtenkanal 10 haben. Der bzw. die Nachrichtenkanäle 10 eines Softwaremoduls Lᵢ können zusätzlich auch dazu verwendet werden, das jeweilige Softwaremodul Lᵢ - lokal oder von einem anderen, angeschlossenen Netzwerk her - zu debuggen oder zu diesen Zwecken ein- und auszuschalten.

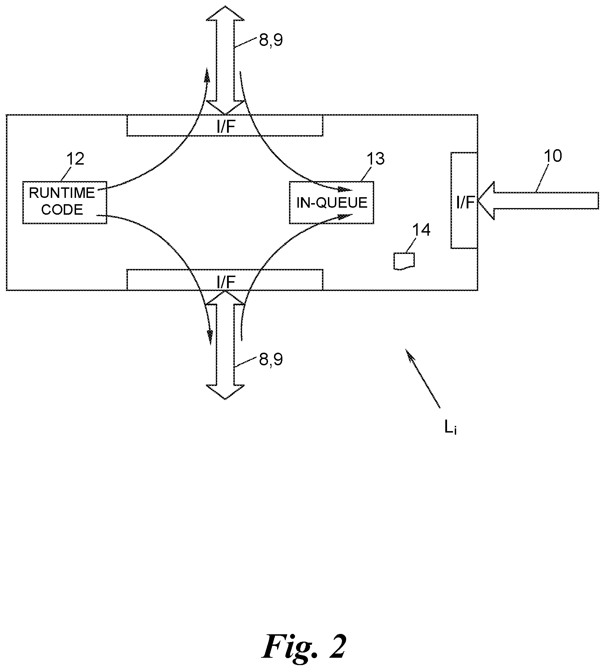

Fig. 2 zeigt den internen Aufbau eines der Softwaremodule Lᵢ im Detail. Jedes Softwaremodul Lᵢ ist für eine der Kommunikationsschichten des geschichteten Netwerkprotokolls zuständig, welches die Vorrichtung 1 bzw. das von dieser ausgeführte Verfahren abwickelt. Im Falle des OSI-Referenzmodells sind sieben Softwaremodule Lᵢ (i = 1 ... 7) vorhanden, welche jeweils eine der sieben OSI-Schichten ausführen. Die Softwaremodule Lᵢ sind dazu gegeneinander "verkapselt" bzw. "autark", indem sie lediglich über die Nachrichtenkanäle 8, 9 zu einem "Stapel" verkettet sind; die Gesamtheit der übereinander gestapelten Softwaremodule Lᵢ wird als Protokoll-Stack 11 bezeichnet.

Es versteht sich, dass im Falle von anderen Netzwerkprotokollen, beispielsweise dem vierschichtigen TCP/IP-Referenzmodell, nur vier Softwaremodule L₁ (i = 1 ... 4) erforderlich sind, von denen jedes für die Funktionalität einer Kommunikationsschicht zuständig ist.

Gemäß Fig. 2 besitzt jedes Softwaremodul Lᵢ dazu ein entsprechendes Steuerungsprogramm 12 und zu dessen Ausführung (vom Abstraktionsmodul 7 bereitgestellte) Ressourcen, insbesondere eine interne Nachrichten-Warteschlange 13, welche über die Kommunikationskanäle 8, 9 einlangende Kommunikationsnachrichten sowie über den Nachrichtenkanal 10 einlangende Steuerungsnachrichten zur Abarbeitung durch das Steuerungsprogramm 12 aufnimmt.

Das in der Schichtenhirarchie am untesten stehende Softwaremodul Lᵢ des Protokoll-Stacks 11, hier das Softwaremodul L₁ für die Bitübertragungsschicht des OSI-Referenzmodells oder die Netzzugangsschicht des TCP/IP-Referenzmodells, ist über seine Kommunikationskanäle 8, 9 mit dem Schnittstellen-Frameworkmodul 5 verbunden, über welches der physische Datenverkehr mit dem Netzwerk 2 abgewickelt wird. Die dazu erforderlichen physischen Schnittstellen I/F werden vom Schnittstellen-Frameworkmodul 5 dem Protocol-Stack 11 bzw. dessen Software-Modulen Lᵢ abstrahiert von der Hardware- bzw. Softwarebetriebsumgebung dargeboten.

Der Quellcode eines Software-Moduls Lᵢ kann dadurch sowohl in einer Embedded-Zielumgebung als auch als Kernelmode-Treiber eines PC-Betriebssystems verwendet werden, ohne den Quellcode des Software-Modules Lᵢ portieren zu müssen. Dies hat den weiteren Vorteil, dass Quellcode für Embedded-Systeme zunächst unter PC-Betriebssystemen entwickelt, getestet und erst danach für ein beliebiges Embedded-Zielsystem kompiliert werden kann, ohne dass der Quellcode für die Softwaremodule Lᵢ portiert werden muss ("Portability without Porting"). Durch den hohen Grad an Wiederverwendung von Code der Softwaremodule Lᵢ wird auch eine ständige Verbesserung der Qualität des Codes durch "Design-Re-Use"-Optimierung erzielt. Daraus ergibt sich auch der weitere Vorteil, Leistungsanforderungen an ein Embedded-Zielsystem, wie Prozessorleistungen und Anforderungen an den Speicher, bereits vor der Entwicklung des Embedded-Zielsystems bzw. der ECU abschätzen zu können. Dadurch, dass die Schnittstellen und Kommunikationskanäle der Softwaremodule Lᵢ spezifiziert sind, können diese auch in verteilten Teams großer Entwicklungsorganisationen auf einfache Weise wiederverwendet werden.

Zur Implementierung von kryptografischen Sicherheitsmechanismen in der von der Vorrichtung 1 abgewickelten Netzwerkprotokoll werden in einer oder mehreren Kommunikationsschichten, d.h. in einem oder mehreren der Softwaremodule Lᵢ, jeweils ein oder mehrere kryptografische Schlüssel 14 verwendet, beispielsweise öffentliche bzw. private Schlüssel von Public/Private-Key-Verschlüsselungsverfahren, welche zwei Kommunikationspartner über das Netzwerk 2 austauschen, oder gemeinsame Schlüssel von Shared-Key-Verschlüsselungsverfahren, die beispielsweise von der Schlüsselerzeugungszentrale 3 erzeugt und über das Netzwerk 2 verteilt werden, od.dgl.

Das für die jeweilige Kommunikationsschicht zuständige Softwaremodul Lᵢ benötigt daher die Kenntnis des/der jeweiligen Schlüssel(s) 14, der/die in seiner Kommunikationsschicht für die jeweiligen Ver- bzw. Entschlüsselung erforderlich ist/sind.

Zu diesem Zweck ist der Task-Scheduler 4 dazu ausgebildet, solche über das Netzwerk 2 und das Schnittstellen-Frameworkmodul 5 aus dem externen Netzwerk 2 erhaltene Schlüssel 14 an das jeweilige Softwaremodul Lᵢ zu verteilen, und zwar über dessen Nachrichtenkanal 10. Bei diesen Schlüsseln 14 kann es sich auch lediglich um Bestandteile eines größeren, zusammengesetzten bzw. "kompletten" Schlüssels handeln, der für die Ver- bzw. Entschlüsselung in der Protokollschicht des Software-moduls Lᵢ erforderlich ist. In diesem Fall werden mehrere im Softwaremodul Lᵢ vom Task-Scheduler 4 auf diese Weise erhaltene Schlüssel 14 zu dem erforderlichen kompletten Schlüssel zusammengesetzt.

Die Schlüssel 14 können z.B. vom Abstraktionsmodul 7 über das Schnittstellen-Frameworkmodul 5 vom Kommunikationspartner im Netzwerk 2, beispielsweise einer anderen Vorrichtung 1 oder der Schlüsselerzeugungszentrale 3, angefordert ("pull") oder erhalten ("push") werden und der Task-Scheduler 4 wird lediglich zur entsprechenden Verteilung bzw. Zustellung des/der so erhaltenen Schlüssel(s) 14 an das jeweilige richtige Softwaremodul Lᵢ im Zuge des Programmablaufs 6 verwendet. Alternativ fordert der Task-Scheduler 4 selbst an bzw. empfängt selbst den bzw. die Schlüssel 14 aus dem Netzwerk 2 und sendet diese(n) an das jeweilige Softwaremodul Lᵢ. Eine weitere Möglichkeit ist, dass eines der höherrangigen Softwaremodule Lᵢ, insbesondere ein Softwaremodul Lᵢ einer höheren anwendungsorientierten Schicht im Zuge einer Anwendung, einen oder mehrere Schlüssel für ein niederrangigeres Softwaremodul Lᵢ empfängt und über den Task-Scheduler 4 bzw. das Abstraktionsmodul 7 an das entsprechende niederrangigere Softwaremodul Lᵢ weiterreicht. Auch dabei fungiert der Task-Scheduler 4 wieder - im Zuge der Abarbeitung der Steuerschleife 6 - als Zusteller des jeweiligen Schlüssels 14 an das entsprechende Softwaremodul Lᵢ über dessen Nachrichtenkanal 10. Ein vom Task-Scheduler 4 erhaltener Schlüssel 14 kann in einem Softwaremodul Lᵢ auch dazu verwendet werden, die Kommunikation auf dessen (zumindest einem) Nachrichtenkanal 10 zu ver- bzw. entschlüsseln, z.B. zur sicheren Übertragung eines folgenden Schlüssels 14.

Die Erfindung ist nicht auf die dargestellten Ausführungsformen beschränkt, sondern umfasst alle Varianten, Kombinationen und Modifikationen derselben, die in den Rahmen der angeschlossenen Ansprüche fallen. Beispielsweise kann der Nachrichtenkanal 10 der vorstehend beschriebenen Vorrichtung auch dazu verwendet werden, um ein Softwaremodule Lᵢ - lokal oder über ein anderes Netzwerk - zu debuggen oder ein- und auszuschalten, wobei der Informationsaustausch über diesen Kanal 10 entsprechend den vorstehend beschriebenen Verfahren ebenso verschlüsselt werden kann.

## Patentansprüche

1. Vorrichtung zur sicheren Datenkommunikation gemäß einem Netzwerkprotokoll mit mehreren zu einem Protokoll-Stack (11) geschichteten Kommunikationsschichten, mit einem Prozessorsystem, in dem ein Prozessor (MP), von einem Task-Scheduler (4) gesteuert, mehrere autarke Softwaremodule (Lᵢ) abarbeitet, die jeweils eine Kommunikationsschicht des Protokoll-Stacks (11) ausführen,
wobei die Softwaremodule (Lᵢ) über Kommunikationskanäle (8, 9) zum Protokoll-Stack (11) verkettet sind und der Protokoll-Stack (11) mit einem Schnittstellen-Framework (5) zur Datenkommunikation mit einem externen Netzwerk (2) in Verbindung steht, und
wobei zumindest ein Softwaremodul (Lᵢ) einen zugeordneten kryptographischen Schlüssel (14) zur sicheren Datenkommunikation in seiner Kommunikationsschicht verwendet,
**dadurch gekennzeichnet,**
**dass** der Task-Scheduler (4) dafür ausgebildet ist, einen über das Schnittstellen-Framework (5) aus dem externen Netzwerk (2) erhaltenen kryptographischen Schlüssel (14) an das zugeordnete Softwaremodul (Lᵢ) zu verteilen.

2. Vorrichtung nach Anspruch 1, **dadurch gekennzeichnet, dass** das Netzwerkprotokoll nach dem OSI-Referenzmodell aufgebaut ist und jedes Softwaremodul (Lᵢ) eine Schicht des OSI-Referenzmodells ausführt.

3. Vorrichtung nach Anspruch 1 oder 2, **dadurch gekennzeichnet, dass** jedes Softwaremodul (Lᵢ) einen Eingang für mindestens einen Nachrichtenkanal (10) hat, welcher mit dem Task-Scheduler (4) verbunden ist, um so den Schlüssel (14) zu erhalten.

4. Vorrichtung nach Anspruch 3, **dadurch gekennzeichnet, dass** das Softwaremodul (Lᵢ) über den Nachrichtenkanal (10) debuggingfähig und/oder ein- und ausschaltbar ist.

5. Vorrichtung nach Anspruch 3 oder 4, **dadurch gekennzeichnet, dass** das Softwaremodul (Lᵢ) dafür ausgebildet ist, einen vom Task-Scheduler (4) erhaltenen weiteren Schlüssel zum sicheren Nachrichtenverkehr auf dem Nachrichtenkanal (10) zu verwenden.

6. Vorrichtung nach einem der Ansprüche 1 bis 5, **dadurch gekennzeichnet, dass** der Task-Scheduler (4) Teil eines vom Prozessor (MP) ausgeführten Abstraktionsmoduls (7) für die Softwaremodule (Lᵢ) ist.

7. Vorrichtung nach einem der Ansprüche 1 bis 6, **dadurch gekennzeichnet, dass** die Vorrichtung (1) ein Modem oder eine ECU und das Prozessorsystem ein Einzelprozessorsystem ist.

8. Verfahren zur sicheren Datenkommunikation gemäß einem Netzwerkprotokoll mit mehreren zu einem Protokoll-Stack geschichteten Kommunikationsschichten,
wobei in einem Prozessorsystem ein Prozessor (MP), von einem Task-Scheduler (4) gesteuert, mehrere autarke Softwaremodule (Lᵢ) abarbeitet, die jeweils eine Kommunikationsschicht des Protokoll-Stacks ausführen,
wobei die Softwaremodule (Lᵢ) über Kommunikationskanäle (8, 9) zum Protokoll-Stack (11) verkettet sind und der Protokoll-Stack (11) mit einem Schnittstellen-Framework (5) zur Datenkommunikation mit einem externen Netzwerk (2) in Verbindung steht, und
wobei zumindest ein Softwaremodul (Lᵢ) einen zugeordneten kryptographischen Schlüssel (14) zur sicheren Datenkommunikation in seiner Kommunikationsschicht verwendet,
**dadurch gekennzeichnet,**
**dass** der zumindest eine kryptographische Schlüssel (14) über das Schnittstellen-Framework (5) aus dem externen Netzwerk (2) erhalten und vom Task-Scheduler (4) an das zugeordnete Softwaremodul (Lᵢ) verteilt wird.

9. Verfahren nach Anspruch 8, **dadurch gekennzeichnet, dass** das Netzwerkprotokoll nach dem OSI-Referenzmodell aufgebaut ist und jedes Softwaremodul (Lᵢ) eine Schicht des OSI-Referenzmodells ausführt.

10. Verfahren nach Anspruch 8 oder 9, **dadurch gekennzeichnet, dass** das genannte Softwaremodul (Lᵢ) den Schlüssel (14) über einen eigenen Nachrichtenkanal (10) vom Task-Scheduler (4) erhält.

11. Verfahren nach Anspruch 10, **dadurch gekennzeichnet, dass** das Softwaremodul (Lᵢ) über den Nachrichtenkanal (10) debugged und/oder ein- und ausgeschaltet werden kann.

12. Verfahren nach Anspruch 10 oder 11, **dadurch gekennzeichnet, dass** das Softwaremodul (Lᵢ) vom Task-Scheduler (4) einen weiteren Schlüssel erhält und zum sicheren Nachrichtenverkehr auf dem Nachrichtenkanal (10) verwendet.

13. Verfahren nach einem der Ansprüche 8 bis 12, **dadurch gekennzeichnet, dass** der Task-Scheduler (4) Teil eines vom Prozessor (MP) ausgeführten Abstraktionsmoduls (7) für die Softwaremodule (Lᵢ) ist.

14. Computerprogrammprodukt, verkörpert auf einem maschinenlesbaren Datenträger, implementierend ein Verfahren nach einem der Ansprüche 8 bis 13.

## Claims

1. A device for secure data communication according to a network protocol having a plurality of communication layers layered into a protocol stack (11), said device comprising a processor system, in which a processor (MP), controlled by a task scheduler (4), executes a plurality of autonomous software modules (Lᵢ), which each run a communication layer of the protocol stack (11),
wherein the software modules (Lᵢ) are linked via communication channels (8, 9) to the protocol stack (11) and the protocol stack (11) is connected to an interface framework (5) for data communication with an external network (2), and
wherein at least one software module (Lᵢ) uses an assigned cryptographic key (14) for secure data communication in its communication layer,
**characterised in that**
the task scheduler (4) is designed to distribute a key (14), obtained from the external network (2) via the interface framework (5), to the assigned software module (Lᵢ).

2. The device according to claim 1, **characterised in that** the network protocol is constructed according to the OSI reference model and each software module (Lᵢ) runs a layer of the OSI reference model.

3. The device according to claim 1 or 2, **characterised in that** each software module (Lᵢ) has an input for at least one message channel (10), which is connected to the task scheduler (4), so as to thus obtain the key (14).

4. The device according to claim 3, **characterised in that** the software module (Lᵢ) can be debugged and/or can be switched on and off via the message channel (10).

5. The device according to claim 3 or 4, **characterised in that** the software module (Lᵢ) is designed to use a further key obtained from the task scheduler (4) for secure message traffic on the message channel (10).

6. The device according to any one of claims 1 to 5, **characterised in that** the task scheduler (4) is part of an abstraction module (7) for the software modules (Lᵢ) which is run by the processor (MP).

7. The device according to any one of claims 1 to 6, **characterised in that** the device (1) is a modem or an ECU and the processor system is a single-processor system.

8. A method for secure data communication according to a network protocol having a plurality of communication layers layered into a protocol stack,
wherein, in a processor system, a processor (MP), controlled by a task scheduler (4), executes a number of autonomous software modules (Lᵢ), which each run a communication layer of the protocol stack,
wherein the software modules (Lᵢ) are linked via communication channels (8, 9) to the protocol stack (11) and the protocol stack (11) is connected to an interface framework (5) for data communication with an external network (2), and
wherein at least one software module (Lᵢ) uses an assigned cryptographic key (14) for secure data communication in its communication layer,
**characterised in that**
the at least one key (14) is obtained from the external network (2) via the interface framework (5) and is distributed by the task scheduler (4) to the assigned software module (Lᵢ).

9. The method according to claim 8, **characterised in that** the network protocol is constructed according to the OSI reference module and each software module (Lᵢ) runs a layer of the OSI reference module.

10. The method according to claim 8 or 9, **characterised in that** the aforementioned software module (Lᵢ) obtains the key (14) from the task scheduler (4) via a separate message channel (10).

11. The method according to claim 10, **characterised in that** the software module (Lᵢ) can be debugged and/or switched on and off via the message channel (10).

12. The method according to claim 10 or 11, **characterised in that** the software module (Lᵢ) obtains a further key from the task scheduler (4) and uses it for secure message traffic on the message channel (10).

13. The method according to any one of claims 8 to 12, **characterised in that** the task scheduler (4) is part of an abstraction module (7) for the software modules (Lᵢ) which is run by the processor (MP).

14. A computer program product, embodied on a machine-readable data carrier, implementing a method according to any one of claims 8 to 13.

## Revendications

1. Dispositif pour la communication de données sécurisée selon un protocole de réseau doté de plusieurs couches de communication superposées en une pile de protocole (11), comprenant un système de processeur dans lequel un processeur (MP), commandé par un planificateur de tâches (4), prend en charge plusieurs modules de logiciel (Lᵢ) autonomes qui exécutent respectivement une couche de communication de la pile de protocole (11),
où les modules de logiciels (Lᵢ) sont interconnectés par le biais de canaux de communication (8, 9) en la pile de protocole (11) et la pile de protocole (11) est en liaison avec un cadre d'interfaces (5) pour la communication de données avec un réseau (2) externe, et
où au moins un module de logiciel (Lᵢ) emploie une clé cryptographique (14) associée pour la communication de données sécurisée dans sa couche de communication,
**caractérisé en ce**
**que** le planificateur de tâches (4) est conçu pour partager une clé cryptographique (14) obtenue à partir du réseau externe (2) par le biais du cadre d'interfaces (5) vers le module de logiciel (Lᵢ) associé.

2. Dispositif selon la revendication 1, **caractérisé en ce que** le protocole de réseau est construit selon le modèle de référence OSI et chaque module de logiciel (Lᵢ) exécute une couche du modèle de référence OSI.

3. Dispositif selon la revendication 1 ou 2, **caractérisé en ce que** chaque module de logiciel (Lᵢ) a une entrée pour au moins un canal d'informations (10), laquelle est reliée avec le planificateur de tâches (4) afin d'obtenir la clé (14) de cette manière.

4. Dispositif selon la revendication 3, **caractérisé en ce que** le module de logiciel (Lᵢ) peut être débogué, et/ou allumé ou éteint, par le biais du canal d'informations (10).

5. Dispositif selon la revendication 3 ou 4, **caractérisé en ce que** le module de logiciel (Lᵢ) est conçu pour employer une autre clé obtenue du planificateur de tâches (4) pour la circulation d'informations sécurisée sur le canal d'informations (10).

6. Dispositif selon l'une des revendications 1 à 5, **caractérisé en ce que** le planificateur de tâches (4) est une partie d'un module d'abstraction (7) pour les modules de logiciel (Lᵢ), quel module d'abstraction (7) est exécuté par le processeur (MP).

7. Dispositif selon l'une des revendications 1 à 6, **caractérisé en ce que** le dispositif (1) est un modem ou une unité de commande électronique (ECU) et le système de processeur est un système à processeur unique.

8. Procédé pour la communication de données sécurisée selon un protocole de réseau doté de plusieurs couches de communication superposées en une pile de protocole,
où, dans un système de processeur, un processeur (MP), commandé par un planificateur de tâches (4), prend en charge plusieurs modules de logiciel (Lᵢ) autonomes qui exécutent respectivement une couche de communication de la pile de protocole,
où les modules de logiciel (Lᵢ) sont interconnectés par le biais de canaux de communication (8, 9) en la pile de protocole (11) et la pile de protocole (11) est en liaison avec un cadre d'interfaces (5) pour la communication de données avec un réseau (2) externe, et
où au moins un module de logiciel (Lᵢ) emploie une clé cryptographique (14) associée pour la communication de données sécurisée dans sa couche de communication,
**caractérisé en ce**
**que** l'au moins une clé cryptographique (14) est obtenue à partir du réseau (2) externe par le biais du cadre d'interfaces (5) et est partagée par le planificateur de tâches (4) vers le module de logiciel (Lᵢ) associé.

9. Procédé selon la revendication 8, **caractérisé en ce que** le protocole de réseau est construit selon le modèle de référence OSI et chaque module de logiciel (Lᵢ) exécute une couche du modèle de référence OSI.

10. Procédé selon la revendication 8 ou 9, **caractérisé en ce que** ledit module de logiciel (Lᵢ) obtient la clé (14) du planificateur de tâches (4) par le biais d'un canal d'informations (10) propre.

11. Procédé selon la revendication 10, **caractérisé en ce que** le module de logiciel (Lᵢ) peut être débogué, et/ou allumé ou éteint, par le biais du canal d'informations (10).

12. Procédé selon la revendication 10 ou 11, **caractérisé en ce que** le module de logiciel (Lᵢ) obtient du planificateur de tâches (4) une autre clé et l'emploie pour la circulation d'informations sécurisée sur le canal d'informations (10).

13. Procédé selon l'une des revendications 8 à 12, **caractérisé en ce que** le planificateur de tâches (4) est une partie d'un module d'abstraction (7) pour les modules de logiciel (Lᵢ), quel module d'abstraction (7) est exécuté par le processeur (PM).

14. Produit de programme informatique, concrétisé sur un support de données pouvant être lu par une machine, mettant en oeuvre un procédé selon l'une des revendications 8 à 13.
